**Europäisches Patentamt**

**European Patent Office**

**Office européen des brevets**

(11) Veröffentlichungsnummer: **0 317 892 B1**

(12) **EUROPÄISCHE PATENTSCHRIFT**

(45) Veröffentlichungstag der Patentschrift: **29.04.92**

(51) Int. Cl.⁵: **G11B 5/53**

(21) Anmeldenummer: **88119089.6**

(22) Anmeldetag: **17.11.88**

(54) Verfahren zur Bearbeitung eines Halteteils für einen Magnetkopf.

(30) Priorität: **26.11.87 DE 3740035**

(43) Veröffentlichungstag der Anmeldung:
**31.05.89 Patentblatt 89/22**

(45) Bekanntmachung des Hinweises auf die
Patenterteilung:
**29.04.92 Patentblatt 92/18**

(84) Benannte Vertragsstaaten:
**AT CH DE FR GB IT LI**

(56) Entgegenhaltungen:

**PATENT ABSTRACTS OF JAPAN, Band 10,
Nr. 316 (P-510)[2372], 28. Oktober 1986; &
JP-A-61 126 625 (CANON INC.) 14-06-1986**

**PATENT ABSTRACTS OF JAPAN, Band 10,
Nr. 93 (P-445)[2150], 10. April 1986; & JP-A
60-226 015 (SONY K.K.) 11-11-1985**

(73) Patentinhaber: **GRUNDIG E.M.V. Elektro-
Mechanische Versuchsanstalt Max Grundig
holländ. Stiftung & Co. KG.
Kurgartenstrasse 37
W-8510 Fürth/Bay.(DE)**

(72) Erfinder: **Gukkenberger, Horst c/o Grundig
E.M.V. Max Grundig
Holländ Stiftung & Co KG Kurgartenstrasse
37
W-8510 Fürth/Bay(DE)**
Erfinder: **Köpnick, Klaus c/o Grundig E.M.V.
Max Grundig
Holländ Stiftung & Co KG Kurgartenstrasse
37
W-8510 Fürth/Bay(DE)**
Erfinder: **Zöllner, Rainer c/o Grundig E.M.V.
Max Grundig
Holländ Stiftung & Co KG Kurgartenstrasse
37
W-8510 Fürth/Bay(DE)**
Erfinder: **Leitner, Fritz c/o Grundig E.M.V. Max
Grundig
Holländ Stiftung & Co KG Kurgartenstrasse
37
W-8510 Fürth/Bay(DE)**

EP 0 317 892 B1

## Beschreibung

Die Erfindung betrifft ein Verfahren zur Bearbeitung elues Halteteils für einen Magnetkopt zur Befestigung eines Aufnahme- und Wiedergabekopfes an einer drehbaren Abtastscheibe in einem Video- oder Tonbandgerät zur Schrägspuraufzeichnung, wobei der Magnetkopf auf das Halteteil aufgeklebt ist.

Es ist bekannt, daß die sehr kleinen und flachen Magnetköpfe, wie sie bei Videorecordern und bei digitalen Tonaufzeichnungsgeräten mit Schrägspuraufzeichung erforderlich sind, auf einem nach der Größe des Magnetkopfes angepaßtem flachen Halteteil aufgeklebt oder aufgeschweißt sind. Dies ist erforderlich, da der sehr empfindliche Magnetkopf nur über ein diesem zugeordneten Halteteil an der Kopftrommel oder auf der Abtastscheibe befestigt und justiert werden kann. Das erforderliche Justieren der Magnetköpfe ist jedoch aufwendig und bei größeren Abweichungen zwischen Magnetkopf mit Halteteil und der Abtastscheibe in Einzelfällen nicht möglich. Dem wird dadurch begegnet, daß die beiden auf der Abtastscheibe zu montierenden Magnetköpfe mäßlich ausgesucht und paarweise einer ebenfalls teilweise nachgearbeiteten Abtastscheibe zugeordnet werden. Hierdurch wird eine individuelle, d.h. für den einzelnen Magnetkopf abgestimmte Nacharbeit an der Abtastscheibe erforderlich.

Aus der JP-A-61 126 625 ist ein Halteteil bekannt, auf das ein Magnetkopf aufgeklebt ist und das auf einer Abtastscheibe befestigt wird. Durch eine materialabtragende mechanische Bearbeitung der Klebefläche des Halteteils soll eine genaue Zuordnung des Magnetkopfes zur Befestigung auf der Abtastscheibe ohne Justierung gewährleistet sein. Nachteilig ist bei dieser Anordnung, daß zwischen der Magnetkopf-Unterkaute und der Befestigungsfläche des Halteteils zur Abtastscheibe Summentolerauzen auftreten, die eine benötigte Genauigkeit der Kopflage zur Abtastscheibe nicht sicherstellen.

Aufgabe der Erfindung ist es daher, das Halteteil eines Magnetkopfes derart zu gestalten und zu bearbeiten, daß jeder beliebige Magnetkopf mit Halteteil, der auf eine Abtastscheibe montiert wird, keiner Justierung bedarf und für den Service-Fall voll kompatibel ist.

Diese Aufgabe wird gemäß der Erfindung durch die kennzeichnenden Merkmale des Anspruchs 1 gelöst.

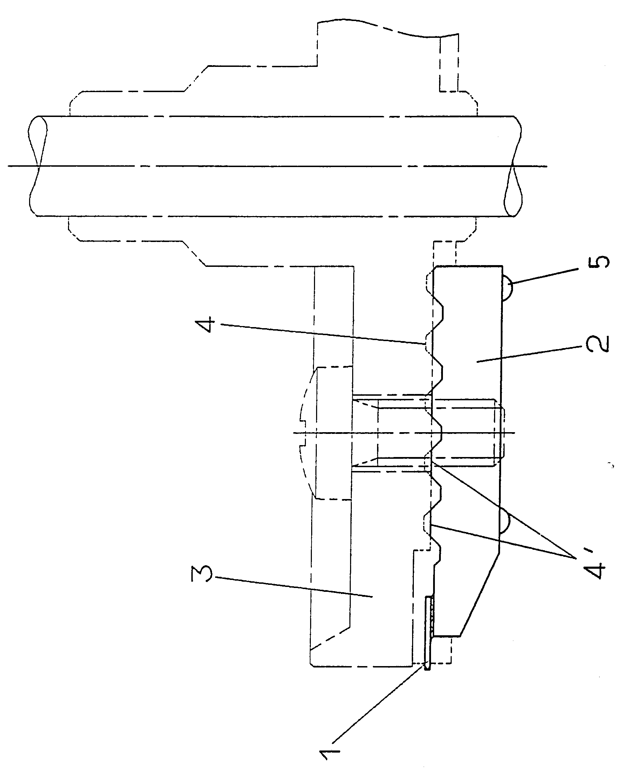

Einzelheiten werden im folgenden anhand der Zeichnung erläutert.

Die gezeichnete Figur zeigt einen schematisch dargestellten Magnetkopf 1, der auf einem Halteteil 2 aufgeklebt ist. Das Halteteil 2 mit Magnetkopf 1 ist auf einer drehbar gelagerten Abtastscheibe 3 aufgeschraubt. Die Abtastscheibe und die Schraubverbindung ist in der dargestellten Figur strichpunktiert eingezeichnet. Das Halteteil 2 weist eine durchgehende Auflagestufe 4 oder wie dargestellt, eine aus einzelnen Auflagestegen 4′ bestehende Auflagestufe auf. Zur Auflage und Befestigung auf der Abtastscheibe wird die Auflagestufe nach einem vorgegebenen Höhenmaß mechanisch bearbeitet. Das Höhenmaß ist bestimmt von der Lage des Kopfes zur Abtastscheibe. Im dargestellten Beispiel ist die Höhe der bearbeiteten Auflagestufe zur unteren Spaltkante des Magnetkopfes gleich Null. Der Materialabtrag an der Auflagstufe wird durch eine über den Kopfspalt des Magnetkopfes vorgenommene Differenzmessung zwischen dem Ist- und dem Sollwert, der sich zwischen der unbearbeiteten Auflagefläche und der vorgegebenen Kopfhöhenlage ergibt, ermittelt. Der ermittelte Wert wird einer Auswertschaltung zugeführt, und diese steuert den Schleifvorgang zum Abtrag der Auflagestufe. Um einen möglichst geringen Bearbeitungsdruck beim Schleifen der Auflagestufe zu erreichen, ist die Auflagefläche in verschiedene Auflagestege 4′ unterteilt. Die Auflagestege können durch einen Prägevorgang erzeugt werden. Es ist auch möglich, eine unterbrochene Auflagefläche nach beliebiger geometrischer Form zu schaffen. Um das Halteteil beim Bearbeiten der Auflagefläche auf eine ebene Bearbeitungsfläche auflegen zu können, weist das Halteteil gegenüber der Auflagestufenseite vorzugsweise drei Auflageflächen 5 als Bearbeitungsauflageflächen auf.

## Patentansprüche

1.  Verfahren zur Bearbeitung eines Halteteils für einen Magnetkopf zur Befestigung eines Aufnahme- und Wiedergabekopfes an einer drehbaren Abtastscheibe (3) in einem Video- oder Tonbandgerät zur Schrägspuraufzeichnung, wobei der Magnetkopf (1) auf das Halteteil (2) aufgeklebt ist, das Halteteil (2) eine Auflagestufe (4/4') zur Auflage und Befestigung auf der Abtastscheibe (3) aufweist, und die Auflagestufe (4,4') senkrecht zur Drehachse der Abtastscheibe (3) und parallel zur Rotationsebene des auf dem Halteteil (2) aufgeklebten Magnetkopfes (1) liegt, dadurch gekennzeichnet, daß die Auflagestufe (4,4') nach einem vom Magnetkopf (1) ausgehenden und vorgegebenen Höhenmaß materialabtragend mechanisch bearbeitet wird, und daß die Steuerung des Materialabtrages der Auflagestufe (4,4') durch eine über den Kopfspalt des Magnetkopfes vorgenommene Differenzmessung zwischen Ist- und Sollwert (Höhenmaß) erfolgt.

**2.** Verfahren nach Anspruch 1, dadurch gekennzeichnet, daß eine unterbrochene Auflagefläche (4') der Auflagestufe (4) bearbeitet wird.

**3.** Verfahren nach den Ansprüchen 1 und 2, dadurch gekennzeichnet, daß eine aus einzelnen Auflagestegen (4') bestehende Auflagestufe (4) bearbeitet wird.

**4.** Verfahren nach einem der bisherigen Ansprüche, dadurch gekennzeichnet, daß das Halteteil (2) zur Bearbeitung vorzugsweise auf drei Auflageflächen (5) gegenüber der Auflagestufenseite aufgelegt wird.

## Claims

**1.** A method for machining a holding part for a magnetic head for mounting a recording and replay head on a rotatable scanning disc (3) in a video or audio tape device for helical-track recording, the magnetic head (1) being bonded to the holding part (2), the holding part (2) exhibiting a supporting step (4/4') for supporting and mounting on the scanning disc (3), and the supporting step (4,4') being located perpendicularly to the axis of rotation of the scanning disc (3) and parallel to the plane of rotation of the magnetic head (1) bonded to the holding part (2), characterised in that the supporting step (4,4') is mechanically machined in a material-removing manner in accordance with a predetermined height dimension starting from the magnetic head (1), and in that the removal of material from the supporting step (4,4') is controlled by a measurement of the difference between actual and nominal value (height dimension) taken over the head gap of the magnetic head.

**2.** Method according to Claim 1, characterised in that an interrupted supporting area (4') of the supporting step (4) is machined.

**3.** Method according to Claims 1 and 2, characterised in that a supporting step (4) consisting of individual supporting ridges (4') is machined.

**4.** Method according to one of the preceding claims, characterised in that the holding part (2) is preferably placed for the machining onto three supporting areas (5) opposite the supporting step side.

## Revendications

**1.** Procédé pour l'usinage d'une pièce support pour une tête magnétique, servant à la fixation d'une tête d'enregistrement et de lecture sur un galet pivotant (3) de balayage installé dans un magnétoscope ou magnétophone à enregistrement hélicoïdal, la tête magnétique (1) étant collée sur la pièce support (2), la pièce support (2) comportant un épaulement (4, 4') d'appui permettant l'appui et la fixation sur le galet (3) de balayage et l'épaulement (4, 4') d'appui étant oriente perpendiculairement à l'axe de rotation du galet (3) de balayage et parallèlement au plan de rotation de la tête magnétique (l) collée sur la pièce support (2), caractérise en ce que l'épaulement (4, 4') d'appui est usiné mécaniquement par enlèvement de matière selon une cote de hauteur prédéterminée partant de la tête magnétique (1), et en ce que la commande de l'enlèvement de matière de l'épaulement (4, 4') d'appui est réalisée par le biais d'une mesure différentielle entre la valeur réelle et la valeur consigne (cote de hauteur), cette mesure étant effectuée au dessus de l'entrefer de tête de la tête magnétique.

**2.** Procédé selon la revendication 1, caractérise en ce que l'on usine une face interrompue (4') d'appui de l'épaulement (4) d'appui.

**3.** Procédé selon les revendications 1 et 2, caractérisé en ce que l'on usine un épaulement (4) d'appui composé de nervures individuelles (4') d'appui.

**4.** Procédé selon l'une des revendications précédentes, caractérisé en ce que la pièce support (2) est, pour l'usinage, en appui, du côté opposé au côté de l'épaulement d'appui, sur des faces (5) d'appui, de préférence au nombre de trois.